Europäisches Patentamt

European Patent Office

Office européen des brevets

(11) Veröffentlichungsnummer: **0 309 777 B1**

(19)

(12) **EUROPÄISCHE PATENTSCHRIFT**

(45) Veröffentlichungstag der Patentschrift: **20.05.92**

(51) Int. Cl.⁵: **B60N 3/04**

(21) Anmeldenummer: **88114503.1**

(22) Anmeldetag: **06.09.88**

(54) **Verkleidungsmatte für den Fussraum von Automobilen.**

(30) Priorität: **02.10.87 DE 3733286**

(43) Veröffentlichungstag der Anmeldung:
**05.04.89 Patentblatt  89/14**

(45) Bekanntmachung des Hinweises auf die
Patenterteilung:
**20.05.92 Patentblatt  92/21**

(84) Benannte Vertragsstaaten:
**ES FR GB IT SE**

(56) Entgegenhaltungen:
**DE-A- 2 206 414**
**DE-A- 2 735 153**
**DE-A- 2 837 136**
**US-A- 2 044 407**
**US-A- 3 104 195**

(73) Patentinhaber: **Pelzer, Helmut**
**Neue Strasse 5**
**W-5804 Herdecke-Ende(DE)**

(72) Erfinder: **Pelzer, Helmut**
**Neue Strasse 5**
**W-5804 Herdecke-Ende(DE)**

(74) Vertreter: **Schneider, Wilhelm, Dipl.-Phys.**
**Merckelbachweg 3**
**W-4770 Soest(DE)**

**Beschreibung**

Die Erfindung betrifft eine Verkleidungsmatte für den Fußraum von Automobilen mit schallabsorbierenden Schichten und/oder aus schäumbaren Materialien gebildeten Feder-Masse- Systemen, wobei deren Rückseite mittels Klebstoff und/oder Entdröhnmasse am Fahrzeugbodenblech oder dergleichen befestigt ist.

Ein solches System ist zum Beispiel aus der DE-A-27 35 153 bekannt.

Bisher ist es üblich, daß derartige vorgefertigte Verkleidungsmatten in hängender Lage vom Hersteller zum Anwender transportiert werden, wo dann die entsprechenden Verkleidungsmatten von dem sie haltenden Hängeständer oder dergleichen abgenommen und in den Fußraum von Automobilen eingelegt werden.

Damit diese Verkleidungsmatten ordnungsgemäß und dauerhaft fixiert werden können, wird vor der Verlegung Klebstoff oder auch Entdröhnmasse rückseitig auf die Verkleidungsmatte und/oder das Fahrzeugbodenblech aufgetragen und die Verkleidungsmatte so mit dem Fahrzeugboden oder dergleichen verklebt.

Dieser Montageweg ist relativ aufwendig, da die Person, die die Verkleidungsmatten verlegt, zusätzlich den Klebstoff und/oder Entdröhnmasse auftragen muß.

Ausgehend von diesem Stand der Technik liegt der Erfindung die Aufgabe zugrunde, eine Verkleidungsmatte gattungsgemäßer Art zu schaffen, bei welcher die Person, die die Verkleidungsmatte verlegen muß, keinen Klebstoff oder Entdröhnmasse mehr auftragen muß, sondern diese Massen schon werkseitig aufgetragen sind.

Zur Lösung dieser Aufgabe schlägt die Erfindung vor, daß die Rückseite der Verkleidungsmatte taschenartige Ausnehmungen aufweist, welche mit zähflüssiger Entdröhnmasse und/oder Klebstoff gefüllt sind, wobei die Taschen als hinterschnittene Aufnahmekammern mit zueinander gleichgerichteten Hinterschnitten ausgebildet sind.

Dadurch, daß auf der Rückseite der Verkleidungsmatte taschenartige Ausnehmungen vorgesehen sind, ist es möglich, in diese Taschen schon beim Hersteller der Verkleidungsmatte zähflüssige Entdröhnmassen und/oder Klebstoff einzufüllen, wobei diese Massen beim Transport der Verkleidungsmatte in den Taschen bleiben, da diese mit Hinterschnitt versehen sind und so lageorientiert angeordnet sind, daß bei lotrechter Anordnung der Verkleidungsmatten ein Ausfließen dieser Massen verhindert ist. Sobald dann die Verkleidungsmatte am Einbauort in beispielsweise den Fußraum von Automobilen eingelegt wird, fließt die zähflüssige Masse aus den Taschen und sorgt für eine flächendeckende Verbindung von Verkleidungsmatte und Untergrund, beispielsweise Bodenblech.

Das Prinzip der Erfindung besteht darin, auf der Rückseite der Verkleidungsmatte ein Reservoir für Entdröhnmasse und/oder Klebstoff vorzusehen, welches Reservoir auf dem Weg vom Hersteller der Verkleidungsmatte bis zum Anwender der Verkleidungsmatte die Masse zurückhält, und erst bei der Verlegung der Matte die Masse freigibt zum Zwecke der Bildung einer Klebverbindung und/oder Entdröhnschicht.

Die Erfindung ist nachstehend anhand eines Ausführungsbeispieles dargestellt.

Es zeigt:

Fig. 1    Eine Verkleidungsmatte in Ansicht;

Fig. 2    desgleichen im Schnit II-II der Fig.1 gesehen.

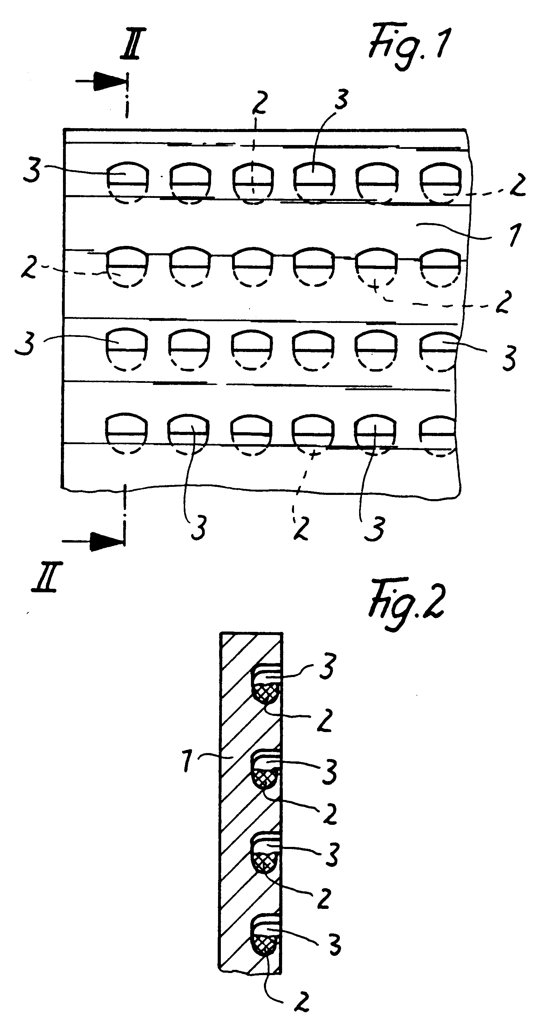

Die Verkleidungsmatte für den Fußraum von Automobilen kann aus beliebigen üblichen Materialien gebildet sein.

Vorzugsweise sind schäumbare Materialien als Ausgangswerkstoff vorgesehen, bei denen die Ausbildung von später noch beschriebenen taschenartigen Ausnehmungen relativ einfach möglich ist.

Zur Befestigung derartiger Verkleidungsmatten am Bodenblech eines Kraftfahrzeuges muß die Verkleidungsmatte rückseitig mit Klebstoff und/oder Entdröhnmasse 2 flächendeckend belegt sein.

Hierzu weist die Verkleidungsmatte 1 auf ihrer Rückseite taschenartige Ausnehmungen 3 auf, welche hinterschnittene Aufnahmekammern mit zueinander gleichgerichteten Hinterschnitten darstellen.

In diese Ausnehmungen 3 ist der zähflüssige oder pastöse Klebstoff 2 bzw. Entdröhnmasse gefüllt, sodaß bei hängender Lagerung bzw. bei hängendem Transport der Verkleidungsmatte 1 die Masse 2 nicht aus den Ausnehmungen ausfließen kann. Erst bei der Verlegung der Verkleidungsmatte 1 beispielsweise auf dem Bodenblech eines Kraftfahrzeuges kann die Entdröhnmasse und/oder der Klebstoff 2 aus den taschenartigen Ausnehmungen 3 ausfließen und die Rückseite der Verkleidungamatte 1 flächendeckend mit dem Unterboden verbinden.

**Patentansprüche**

1.  Verkleidungsmatte (1) für den Fußraum von Automobilen mit schallabsorbierenden Schichten und/oder aus schäumbaren Materialien gebildeten Feder-Masse-Systemen, wobei deren Rückseite mittels Klebstoff und/oder Entdröhnmasse am Fahrzeugbodenblech oder dergleichen befestigbar ist,
    dadurch gekennzeichnet,
    daß die Rückseite der Verkleidungsmatte (1) taschenartige Ausnehmungen(3) aufweist, welche mit zähflüssiger Entdröhnmasse und/oder Klebstoff (2) gefüllt sind, wobei die Taschen als hinterschnittene Aufnahmekammern mit zueinander gleichgerichteten Hinterschnitten ausgebildet sind.

## Claims

1. Lining mat (1) for the floor space of motor cars, having sound-absorbing layers and/or spring-compound systems formed from foamable materials, its rear side being securable on the vehicle floor panel or the like by means of adhesive and/or anti-drumming compound, characterised in that the rear side of the lining mat (1) has pocket-like recesses (3) which have been filled with viscous anti-drumming compound and/or adhesive (2), the pockets being designed as undercut receiving chambers with undercuts facing in the same direction to one another.

## Revendications

1. Tapis de revêtement pour le plancher d'automobiles, notamment avec couches absorbant le son et/ou systèmes de masse élastique formés de matériaux expansibles en mousse, le revers de ce tapis de revêtement pouvant se fixer au moyen de colle et/ou de masse antiphonique à la tôle du plancher du véhicule ou autres éléments similaires, tapis de revêtement caractérisé en ce que le revers de ce tapis de revêtement (1) comporte des évidements (3) en forme de poches, qui sont remplis de masse antiphonique visqueuse et/ou de colle (2), ces poches étant constituées sous la forme de chambres de réception en contre-dépouille, avec des contre-dépouilles dirigées dans le même sens l'une par rapport à l'autre.

EP 0 309 777 B1

*Fig.1*

*Fig.2*